# EUROPÄISCHE PATENTANMELDUNG

(11) **EP 2 105 286 A1**
(43) Veröffentlichungstag der Anmeldung: **30.09.2009**
(21) Anmeldenummer: 09156454.2
(22) Anmeldetag: 27.03.2009
(51) Int. Cl.: B29C 70/52

(54) **Strangziehverfahren und Strangziehvorrichtung zum Herstellen von Profilen aus Faserverbundwerkstoffen**

(30) Priorität: 27.03.2008 DE 102008016194
(71) Anmelder: Universität Bremen, 28359 Bremen (DE)
(72) Erfinder: Purol, Holger, Dipl-Ing., 27446 Selsingen (DE); Dommes, Henrik, Dipl.-Ing., 28209 Bremen (DE); Hoffmeister, Christoph, Dipl.-Ing., 28203 Bremen (DE); Herrmann, Axel S., Prof. Dr. - Ing., 21682 Stade (DE)
(74) Vertreter: Tappe, Udo

(57) **Zusammenfassung**

Die Erfindung betrifft ein Strangziehverfahren zum Herstellen von Profilen aus Faserverbundwerkstoffen, bei dem ein Fasermaterial (12, 13) imprägniert wird, bei dem das imprägnierte Fasermaterial (12, 13) zu einem Faserverbundprofil ausgehärtet wird, und bei dem das Faserverbundprofil abgezogen wird. Zum einfachen und reproduzierbaren Herstellen von Profilen aus Faserverbundwerkstoffen mit einer vorgegebenen Krümmung ist das Strangziehverfahren **dadurch gekennzeichnet, dass** das Faserverbundprofil vor dem vollständigen Aushärten beim Abziehen derartig mit einer Kraft beaufschlagt wird, dass die Fasern des Fasermaterials (12, 13) an verschiedenen Seiten des Faserverbundprofils um ein verschiedenes Maß gegeneinander verschoben werden.

## Beschreibung

Die Erfindung betrifft ein Strangziehverfahren zum Herstellen von Profilen aus Faserverbundwerkstoffen, bei dem ein Fasermaterial imprägniert wird, bei dem das imprägnierte Fasermaterial zu einem Faserverbundprofil ausgehärtet wird, und bei dem das Faserverbundprofil abgezogen wird. Ferner betrifft die Erfindung eine Strangziehvorrichtung zum Herstellen von Profilen aus Faserverbundwerkstoffen mit einem Härteabschnitt zum Aushärten eines imprägnierten Fasermaterials zu einem Faserverbundprofil, und mit einem Zugmodul zum Abziehen des Faserverbundprofils.

Ein solches Strangziehverfahren und eine solche Vorrichtung sind aus der US 4,892,600 bekannt.

Faserverstärkte Kunststoffe bzw. Matrixmaterialien werden in den unterschiedlichsten Bereichen wie beispielsweise der Windenergiebranche, im Schiffs- und Bootsbau, der Bauindustrie, im Maschinenbau, der Sportartikelindustrie, der Schienenfahrzeugindustrie, im Möbelbau, und zunehmend in der Luft- und Raumfahrtindustrie, der Medizintechnik sowie der Automobilbranche eingesetzt.

Mittels des Strangziehverfahrens, auch Pultrusionsverfahren genannt, sind gerade Profile mit konstantem Querschnitt aus Faserverbundwerkstoffen kostengünstig, in großen Mengen und mit einer hohen Prozesssicherheit herstellbar. Die Faserverbundwerkstoffe bestehen aus einer Anordnung von textilen bandförmigen, mattenförmigen und/oder gewebeförmigen Materialien aus beispielsweise Glas, Kohlenstoff-, Aramid- oder Naturfasern, die in einem umhüllenden und imprägnierten Matrixsystem eingebettet sind. Bei faserverstärkten Kunststoffen besteht das Matrixsystem aus ausgehärteten Duroplasten oder abgekühlten Thermoplasten. Im Falle von mehrachsigen mechanischen Belastungen werden zusätzliche Faservliese, Gewebe, Geflechte und/oder andere Textilien mit zugeführt. Aufgrund einer geeigneten Anordnung der Fasern in Verbindung mit einem Matrixsystem werden mit Hilfe von verschiedenen Fertigungsverfahren und unter Verwendung geeigneter Formwerkzeuge unterschiedliche Bauteile geformt. Diese Bauteile zeichnen sich aufgrund der geringen Dichte der Fasern durch ein niedriges spezifisches Gewicht bei gleichzeitig sehr guten mechanischen Eigenschaften aus. Das die Fasern umgebende ausgehärtete Matrixsystem schützt die Fasern vor Einflüssen von außen, stützt sie bei Druckbelastung gegen ein Ausknicken und dient zur Formung des Bauteils, in das die auftretenden Kräfte einleitbar sind.

Bei den üblichen Strangziehverfahren ist von Nachteil, dass lediglich gerade Profile und/oder einfache flächige Bauteile herstellbar sind. Aufgrund des zunehmenden Bedarfs an Profilen und Bauteilen aus Faserverbundwerkstoffen für beispielsweise den Flugzeugbau oder die Automobilindustrie wachsen jedoch die Anforderungen an komplexere Geometrien der Profile und Bauteile. So sind beispielsweise kontinuierlich gekrümmte Profile mittels der bekannten Strangziehverfahren nicht herstellbar.

Die US 4,892,600 offenbart ein Strangziehverfahren und eine Vorrichtung zum Herstellen von Profilen aus thermoplastischen Kunststoffen. Hierbei kann das Strangmaterial nach dem Durchlaufen eines beheizbaren Formwerkzeuges und vor dem Durchlaufen eines Zugmoduls mittels einer senkrecht zur Zugrichtung verschiebbaren Kühlform ausgelenkt werden. In der Kühlform wird das Strangmaterial praktisch vollständig ausgehärtet. Auf diese Weise lassen sich mittels der Kühlform Biegekanten herstellen. Hierdurch entstehen im Endprofil segmentartig Biegekanten, die die ansonsten geradlinig verlaufenden Profilabschnitte ineinander übergehen lassen. Nachteilig ist hierbei, dass keine kontinuierliche fortlaufende Krümmung des Profils realisierbar ist. Zudem ist keine kontinuierlich veränderbare Krümmung des Profils herstellbar. Des Weiteren ist nachteilig, dass keine duroplastischen Kunststoffe verarbeitbar sind.

Des Weiteren ist es bekannt, beispielsweise gekrümmte Profile mittels Handlaminierverfahren oder Autoklavverfahren herzustellen. Hierbei ist von Nachteil, dass die Fertigung von Bauteilen aus Faserverbundwerkstoffen weitgehend durch eine handwerklich orientierte Einzelanfertigung geprägt ist. Dies führt zu einem hohen Herstellungs-, Personal- und Kostenaufwand.

Das der Erfindung zugrunde liegende Problem ist es daher, ein Strangziehverfahren und eine Strangziehvorrichtung der eingangs genannten Art derart weiter zu entwickeln, dass Profile aus Faserverbundwerkstoffen mit einer vorgegebenen Krümmung auf einfache und reproduzierbare Weise herstellbar sind.

Das Problem wird mittels eines Strangziehverfahrens der eingangs genannten Art dadurch gelöst, dass das Faserverbundprofil vor dem vollständigen Aushärten beim Abziehen derartig mit einer Kraft beaufschlagt wird, dass die Fasern des Fasermaterials an verschiedenen Seiten des Faserverbundprofils um ein verschiedenes Maß gegeneinander verschoben werden. Ferner wird das Problem durch eine Strangziehvorrichtung der eingangs genannten Art gelöst durch Mittel zum Beaufschlagen des Faserverbundprofils vor dem vollständigen Aushärten beim Abziehen mit einer Kraft zum Verschieben der Fasern des Fasermaterials um ein verschiedenes Maß an verschiedenen Seiten des Faserverbundprofils gegeneinander.

Nach dem erfindungsgemäßen Strangziehverfahren bzw. der erfindungsgemäßen Strangziehvorrichtung sind somit Profile mit einer vorgegeben Krümmung auf einfache und reproduzierbare Weise herstellbar. Hierdurch wird eine größere Freiheit in der Gestaltung von Profilen und Bauteilen aus Faserverbundwerkstoffen erreicht. Somit sind höhere Funktionalitäten, eine erweiterte Nutzung des Leichtbaupotentials und die Abdeckung weiterer Einsatzgebiete realisierbar.

Bei einer Weiterbildung der Erfindung wird das Fasermaterial an einer Seite des Faserverbundprofils beim Abziehen gestreckt oder gestaucht. Hierdurch wird auf einfache Art ein Verschieben der Fasern des Fasermaterials um ein verschiedenes Maß an verschiedenen Seiten des Faserverbundprofils gegeneinander erreicht.

Vorteilhafterweise besteht das Fasermaterial aus mehreren Lagen, und beim Abziehen werden einzelne Lagen gegeneinander zumindest teilweise verschoben.

Die Verwendung von Fasermaterial aus mehreren Lagen erleichtert die Herstellung von Faserverbundprofilen mit einer vorgegebenen Krümmung.

Entsprechend einer weiteren Ausführungsform wird das Faserverbundprofil vor dem vollständigen Aushärten unter einem Anstellwinkel über eine Kante gezogen. Auf überraschend einfache Weise ist es somit möglich Profile aus Faserverbundwerkstoffen mit kontinuierlichen Krümmungen herzustellen.

Nach einer Weiterbildung des Strangziehverfahrens zum Herstellen von Profilen aus Faserverbundwerkstoffen mit endlosem Strangmaterial, einem Imprägniermodul, einem beheizbaren Form-/Härtemodul und einem Zugmodul, wobei insbesondere in einem ersten Betriebsmodus zum Herstellen von geradlinigen Profilen das Strangmaterial in einer geradlinigen Prozesslinie durch sämtliche Module gezogen wird und in einem zweiten Betriebsmodus zum Herstellen von nicht-geradlinigen Profilen das Strangmaterial unter einem Anstellwinkel größer 0° zur Prozesslinie ausgelenkt wird, wird unvollständig ausgehärtetes Strangmaterial geradlinig in Richtung des Zugmoduls unter dem Anstellwinkel größer 0° über die Kante gezogen.

Das Strangmaterial durchläuft zunächst das Form-/Härtemodul. Hier bekommt das Strangmaterial den für das herzustellende Profil gewünschten Querschnitt. Wenn das Strangmaterial das Form-Härtemodul verlässt, ist dieses noch nicht vollständig ausgehärtet. In diesem Zustand wird das Strangmaterial in Richtung des Zugmoduls unter einem Anstellwinkel größer 0° über eine Kante gezogen. Der Anstellwinkel ist frei wählbar. Durch das Ziehen über die Kante entsteht nach Durchlaufen des Zugmoduls und sobald das Strangmaterial nicht mehr mittels des Zugmoduls gezogen wird und damit nicht mehr unter einer Zugspannung steht eine Krümmung im Profil. Mit zunehmender Schrägstellung und damit einer Vergrößerung des Anstellwinkels nimmt die Krümmung der erzeugten Profile zu bzw. der Krümmungsradius nimmt ab. Aufgrund der geradlinigen Zugbewegung in Richtung auf das Zugmodul wird vermieden, dass das Strangmaterial, bevor es vollständig ausgehärtet ist, erneut über eine Kante gezogen wird. Hierdurch ist eine einfache und reproduzierbare Herstellung von kontinuierlich gekrümmten Profilen gewährleistet. Durch einen Wechsel zwischen dem ersten und dem zweiten Betriebsmodus während einer fortlaufenden Durchführung des Strangziehverfahrens können Profile sowohl mit geradlinigen Abschnitten als auch mit kontinuierlich gekrümmten Abschnitten hergestellt werden.

Nach einer Weiterbildung des Strangziehverfahrens werden Faserverbundwerkstoffe mit duromeren Matrixmaterialien verwendet. Somit sind gekrümmte Profile aus duroplastischen Kunststoffen herstellbar.

Nach einer weiteren Ausführungsform des Strangziehverfahrens wird das Form-/Härtemodul unter einem Anstellwinkel größer 0° zur Prozesslinie geneigt gestellt. Aufgrund der Schrägstellung des beheizbaren Form-/Härtemoduls verläuft das Strangmaterial innerhalb des Form-/Härtemoduls schräg zur geradlinigen Prozesslinie. Hierdurch wird das Strangmaterial beim Austreten aus dem Form-/Härtemodul über eine Kante des Form-/Härtemoduls gezogen. Somit sind keine zusätzlichen Elemente notwendig, die in das Strangziehverfahren integriert werden müssen.

Vorteilhafterweise wird das Strangmaterial vom Form-/Härtemodul koaxial zur Prozesslinie mittels des Zugmoduls abgezogen. Hierbei bedeutet koaxial entweder, dass das Strangmaterial parallel zur Prozesslinie oder in einer Überlagerung mit der Prozesslinie mittels des Zugmoduls vom Form-/Härtemodul und der Kante abgezogen wird. Hierdurch wird vermieden, dass das Strangmaterial nach dem für die Entstehung der Krümmung des Profils entscheidenden Zug über die Kante des Form-/Härtemoduls noch einmal über eine weitere Kante beispielsweise des Zugmoduls gezogen wird, wodurch das Krümmungsergebnis und/oder die Reproduzierbarkeit der Krümmung des Profils verbessert wird.

Entsprechend einer weiteren Ausführungsform wird die Krümmung der Profile mittels einer Veränderung des Anstellwinkels, insbesondere kontinuierlich, verändert. Somit sind einerseits kontinuierlich gekrümmte Profile mit einem konstanten Krümmungsradius als auch gekrümmte Profile mit kontinuierlich veränderbaren Krümmungsradien herstellbar. Dies ermöglicht die Herstellung einer Vielzahl von Bauteilen aus Faserverbundwerkstoffen mit komplexen Geometrien.

Gemäß einer Weiterbildung wird die Krümmung der Profile bei einem, insbesondere konstanten, Anstellwinkel größer 0° mittels einer Veränderung der Temperatur des beheizbaren Form-/Härtemoduls, vorzugsweise kontinuierlich, verändert. Die Krümmung des Profils ist abhängig vom Grad der Aushärtung des Strangmaterials beim Zug über die Kante. Soll bei einer konstanten Temperatur innerhalb des Form-/Härtemoduls eine starke Krümmung des Profils erreicht werden, muss der Anstellwinkel größer gewählt werden als für eine geringe Krümmung des Profils. Bei einem konstanten Anstellwinkel größer 0° werden dagegen unterschiedliche Krümmungsradien erreicht, in dem die Temperatur im Form-/Härtemodul verändert wird. Wenn die Temperaturen im Form-/Härtemodul so gewählt sind, dass eine stärkere Aushärtung des Strangmaterials erfolgt, ist eine geringere Krümmung des Profils erreichbar als wenn mittels geeignet gewählter Temperaturen eine geringer ausgeprägte Aushärtung im Form-/Härtemodul erfolgt.

Nach einer weiteren Ausführungsform wird die Krümmung der Profile bei einem, insbesondere konstanten, Anstellwinkel größer 0° mittels einer Veränderung der Geschwindigkeit beim Durchziehen des Strangmaterials durch das Form-/Härtemodul, vorzugsweise kontinuierlich, verändert. Bei konstanten Temperaturen im Form-/Härtemodul und einem konstanten Anstellwinkel größer 0° werden unterschiedliche Krümmungen mittels unterschiedlicher Geschwindigkeiten beim Durchziehen des Strangmaterials durch das Form-/Härtemodul erreicht, wobei das Strangmaterial bei einer höheren Durchzuggeschwindigkeit weniger aushärtet und damit eine größere Krümmung des Profils realisierbar ist als bei einer niedrigeren Durchzuggeschwindigkeit.

Entsprechend einer Weiterbildung wird die Krümmung der Profile mittels der Veränderung des Anstellwinkels und/oder der Veränderung der Temperatur des beheizbaren Form-/Härtemoduls und/oder der Veränderung der Geschwindigkeit beim Durchziehen des Strangmaterials durch das Form-/Härtemodul, insbesondere kontinuierlich, verändert. Somit sind unterschiedliche Krümmungsradien über eine Kombination der Veränderung des Anstellwinkels, der Temperatur des Form-/Härtemoduls und/oder der Durchzuggeschwindigkeit herstellbar. Hierbei können jeweils ein, zwei oder drei Parameter gleichzeitig oder alternativ verändert werden. Der Krümmungsradius stellt sich somit als eine Funktion des Anstellwinkels und der Temperatur des Form-/Härtemoduls und/oder der Durchzuggeschwindigkeit dar. Abhängig von dem konkreten Aufbau des Form-/Härtemoduls kann dieses eine unterschiedlich ausgeprägte Trägheit in Bezug auf eine Temperaturveränderung besitzen. Im Falle einer großen Trägheit des Form-/Härtemoduls auf Temperaturveränderungen ist es von Vorteil, wenn für eine schnelle Änderung des Krümmungsradius der Anstellwinkel und/oder die Durchzuggeschwindigkeit verändert wird.

Gemäß einer weiteren Ausführungsform wird zum Aushärten des imprägnierten Fasermaterials ein vorbestimmtes Temperaturprofil eingestellt. So können innerhalb des Form-/Härtemoduls mehrere Heizelemente angeordnet sein, deren Temperaturen einzeln einstellbar sind. Hierdurch ist ein zum Aushärten des Fasermaterials geeignetes Temperaturprofil einstellbar.

Vorteilhafterweise wird das Strangmaterial vor dem Durchziehen durch das Form/Härtemodul durch ein oder mehrere Vorformmodule gezogen. Mittels der Vorformmodule wird das Strangmaterial schrittweise entsprechend des endgültigen Profils bzw. des Zielquerschnittes geformt und parallelisiert.

Nach einer Weiterbildung der erfindungsgemäßen Strangziehvorrichtung ist das Faserverbundprofil vor dem vollständigen Aushärten unter einem Anstellwinkel über eine Kante ziehbar. Hierdurch ist auf einfache und reproduzierbare Weise eine bestimmte Krümmung in Faserverbundprofilen realisierbar.

Nach einer weiteren Ausführungsform der Strangziehvorrichtung, insbesondere zum Durchführen des Strangziehverfahrens zum Herstellen von Profilen aus Faserverbundwerkstoffen mit endlosem Strangmaterial, einem Imprägniermodul, einem beheizbaren Form-/Härtemodul und einem Zugmodul, wobei insbesondere in einem ersten Betriebsmodus zum Herstellen von geradlinigen Profilen das Strangmaterial in einer geradlinigen Prozesslinie durch sämtliche Module mittels des Zugmoduls ziehbar ist und in einem zweiten Betriebsmodus zum Herstellen von nicht-geradlinigen Profilen das Strangmaterial unter einem Anstellwinkel größer 0° zur Prozesslinie ausgelenkt ist, ist unvollständig ausgehärtetes Strangmaterial geradlinig in Richtung des Zugmoduls unter dem Anstellwinkel größer 0° mittels des Zugmoduls über die Kante ziehbar. Vorteilhafterweise ist das Form-/Härtemodul mittels eines Verstellelementes mit einem Anstellwinkel größer 0° zur Prozesslinie geneigt einstellbar. Hierbei ist von Vorteil, dass der Anstellwinkel mittels des Verstellelementes kontinuierlich veränderbar ist. Somit ist gewährleistet, dass der Krümmungsradius durch Veränderung des Anstellwinkels kontinuierlich veränderbar ist. Zudem ist es mit Hilfe des Verstellelementes und der Veränderung des Anstellwinkels möglich fortlaufend und während des normalen Betriebes zwischen dem ersten Betriebsmodus und dem zweiten Betriebsmodus zu wechseln. Somit sind komplexe Bauteile bzw. Profile mit unterschiedlichen Krümmungsradien, verschieden langen Krümmungsabschnitten und/oder geradlinigen Abschnitten herstellbar. Vorteilhafterweise ist das Verstellelement mittels einer Mechanik und/oder einer Steuerung verstellbar. Somit ist das Verstellelement einerseits über beispielsweise ein Stellrad und ein Feingewinde rein mechanisch auf zuverlässige und einfache Art verstellbar. Alternativ oder ergänzend kann das Verstellelement auch mittels einer Steuerung angesteuert werden. Mittels der Steuerung können die Anstellwinkel sehr genau und reproduzierbar eingestellt werden. Hierdurch ist eine zuverlässige Reproduktion der Profile gewährleistet. Ferner kann die Steuerung genutzt werden, um zusätzlich oder alternativ die Temperatur des Form-/Härtemoduls und/oder die Durchzuggeschwindigkeit des Strangmaterials durch das Form-/Härtemodul zu steuern.

Entsprechend einer Weiterbildung der erfindungsgemäßen Vorrichtung ist das Verstellelement an einer Eintrittsöffnung des Form-/Härtemoduls angeordnet, wobei vorzugsweise ein Drehpunkt zum Einstellen des Anstellwinkels für das Form-/Härtemodul an einer Austrittsöffnung des Form-/Härtemoduls angeordnet ist. Somit ist die Eintrittsöffnung des Form-/Härtemoduls radial zur Längsrichtung der Prozesslinie bei einem Anstellwinkel größer 0° verschoben, während die Austrittsöffnung des Form-/Härtemoduls auf der Prozesslinie liegt. Hierdurch ist gewährleistet, dass das Strangmaterial vom Form-/Härtemodul koaxial zur Prozesslinie, nämlich auf der Prozesslinie, mittels des Zugmoduls abgezogen wird.

Gemäß einer weiteren Ausführungsform ist das Form-/Härtemodul mittels des Verstellelementes mit einem ersten Anstellwinkel um eine erste Achse verstellbar. Somit sind Krümmungen des Profils in einer ersten Ebene der Prozesslinie realisierbar. Vorteilhafterweise ist das Form-/Härtemodul mittels des Verstellelementes mit einem zweiten Anstellwinkel um eine zweite Achse verstellbar, wobei die zweite Achse von der ersten Achse verschieden ist. Damit sind zusätzlich oder alternativ Krümmungen des Profils in einer zweiten Ebene der Prozesslinie herstellbar. Somit kann einerseits ein erster Anstellwinkel größer als 0° oder ein zweiter Anstellwinkel größer als 0° gewählt werden. Vorteilhafterweise ist das Form-/Härtemodul, insbesondere zum Herstellen von sphärischen Profilsträngen, gleichzeitig um den ersten Anstellwinkel und den zweiten Anstellwinkel verstellbar. Somit können sowohl der erste als auch der zweite Anstellwinkel gleichzeitig größer als 0° gewählt werden. Damit sind Profile mit unterschiedlichen Krümmungsradien, Krümmungslängen und/oder Krümmungsorientierungen realisierbar.

Nach einer Weiterbildung ist das Imprägniermodul als ein Tränkbad ausgebildet. Vorzugsweise wird das endlose Strangmaterial von einem Materialentnahmemodul zugeführt. Das Strangmaterial wird von dem Materialentnahmemodul kommend durch das Tränkbad gezogen und mit einem sich in dem Tränkbad befindenden Kunststoff bzw. Matrixmaterial getränkt bzw. imprägniert. Alternativ hierzu kann das Imprägniermodul als ein Bestandteil des Form-/Härtemoduls ausgebildet sein. Hierbei findet die Imprägnierung des Strangmaterials mittels einer Direktinjektion in dem Form-/Härtemodul statt.

Von besonderem Vorteil ist die Verwendung des erfindungsgemäßen Strangziehverfahrens und/oder der erfindungsgemäßen Strangziehvorrichtung zum Herstellen von, insbesondere kontinuierlich, gekrümmten Profilen aus Faserverbundwerkstoffen, vorzugsweise mit duromeren Matrixmaterialien.

Nachfolgend wird die Erfindung anhand eines Ausführungsbeispieles mittels der folgenden Zeichnung näher erläutert. Es zeigt:

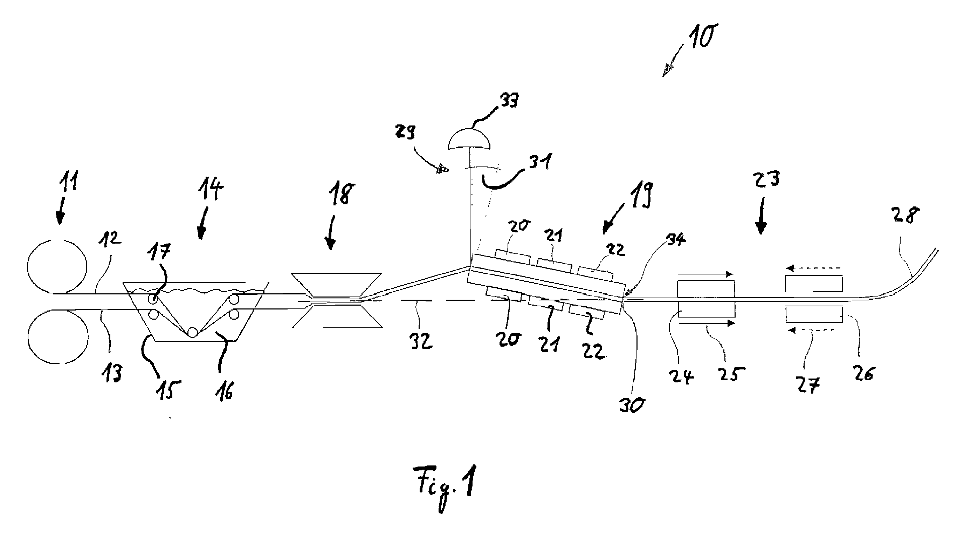

- Fig. 1: eine schematische Seitenansicht einer erfindungsgemäßen Vorrichtung.

Fig. 1 zeigt eine schematische Seitenansicht einer erfindungsgemäßen Vorrichtung 10. Die Vorrichtung 10 weist ein Materialentnahmemodul 11 auf. Von dem Materialentnahmemodul 11 wird Strangmaterial 12, 13 abgezogen. Bei dem Strangmaterial 12, 13 handelt es sich um Fasermaterial, das auf Rollen in dem Materialentnahmemodul 11 gelagert wird. Das Strangmaterial 12, 13 wird einem Imprägniermodul 14 zugeführt. Das Imprägniermodul 14 ist als ein Tränkbad 15 ausgebildet und ist mit einem flüssigen Kunststoff bzw. Matrixmaterial 16 gefüllt. Hier werden Duromere als Matrixmaterial 16 verwendet. Das Strangmaterial 12, 13 wird mittels Umlenkrollen 17 durch das Matrixmaterial 16 des Tränkbades 15 geführt.

Nach dem Imprägnieren des Strangmaterials 12, 13 mittels des Matrixmateriales 16 in dem Tränkbad 15 wird das imprägnierte Strangmaterial 12, 13 durch ein Vorformmodul 18 gezogen. Hierdurch erfolgt eine Vorformung des Querschnittes sowie eine Parallelisierung des Strangmaterials 12, 13.

Mittels eines Form-/Härtemoduls 19 erfolgt die endgültige Formgebung des Strangmaterials 12, 13 hinsichtlich des Zielquerschnittes. Das Form-/Härtemodul 19 weist Heizelemente 20, 21, 22 auf. Die Temperaturen für die Heizelemente 20, 21, 22 sind für jedes Heizelement 20, 21, 22 einzeln einstellbar. Bei dem gezeigten Ausführungsbeispiel steigt die Temperatur des Strangmaterials 12, 13 von etwa 100°C bei dem Heizelement 20 bis auf etwa 150°C bei dem Heizelement 22 an.

Das Strangmaterial 12, 13 wird mittels eines Zugmoduls 23 durch die einzelnen Module 11, 14, 18, 19 der Vorrichtung 10 gezogen. Das Zugmodul 23 besteht aus einem ersten Zugelement 24 und einem zweiten Zugelement 26. Die Zugelemente 24, 26 ziehen abwechselnd das Strangmaterial 12, 13. Während das Zugelement 24 gemäß Pfeil 25 das Strangmaterial zieht, verfährt das Zugelement 26 ohne Kontakt zum Strangmaterial 12, 13 gemäß Pfeil 27 in die entgegen gesetzte Richtung. Sodann zieht das Zugelement 26 das Strangmaterial 12, 13 in Richtung des Pfeils 25, während das Zugelement 24 ohne Kontakt zum Strangmaterial 12, 13 in Richtung des Pfeils 27 zurückfährt. Hierdurch ist ein kontinuierlicher Zug des Strangmaterials 12, 13 durch die Vorrichtung 10 gewährleistet. Nach dem Durchlaufen des Zugmoduls 23 ergibt sich ein Profilstrang 28, der mittels eines nicht näher dargestellten Trennmoduls, das beispielsweise als eine Säge ausgebildet ist, entsprechend der erforderlichen Länge abgelängt wird.

Im Bereich einer Eintrittsöffnung für das Strangmaterial 12, 13 des Form-/Härtemoduls 19 ist ein Verstellelement 29 angeordnet. Das Verstellelement 29 ist mittels eines Stellrads 33 betätigbar. Des Weiteren weist das Form-/Härtemodul 19 im Bereich einer Austrittsöffnung einen Drehpunkt 30 auf. Dieser Drehpunkt 30 liegt auf einer Prozesslinie 32. Die Austrittsöffnung des Form-/Härtemoduls 19 bildet eine Kante 34, über die das Strangmaterial 12, 13 gezogen wird. Mittels des Stellrads 33 des Verstellelementes 29 ist ein Anstellwinkel 31 einstellbar. Die Prozesslinie 32 verdeutlicht den geradlinigen Verlauf des Strangmaterials 12, 13 durch die verschiedenen Module 11, 14, 18, 19, 23 der Vorrichtung 10, wenn ein Anstellwinkel von 0° eingestellt ist.

Nachfolgend wird die Funktionsweise der Vorrichtung 10 anhand der Fig.1 näher erläutert:

Das Strangmaterial 12, 13 wird mittels des Zugmoduls 23 durch die anderen Module 11, 14, 18, 19 der Vorrichtung 10 gezogen. Hierbei wird das Strangmaterial 12, 13 zunächst als Fasermaterial 12, 13 von Rollen des Materialentnahmemoduls 11 abgezogen. Das Fasermaterial 12, 13 wird anschließend durch ein mit flüssigem Matrixmaterial 16, nämlich mit Duromeren, gefülltes Tränkbad 15 gezogen. In dem Tränkbad 15 sind mehrere Umlenkrollen 17 angeordnet, die die Fasermaterialien 12, 13 beim Durchzug durch das Tränkbad 15 mehrfach umlenken. Hierdurch wird eine gute Imprägnierung des Fasermaterials 12, 13 erreicht. Alternativ zur Verwendung eines Tränkbades 15 kann die Imprägnierung durch eine Direktinjektion innerhalb des Form-/Härtemoduls 19 erreicht werden. Es ist aber auch möglich, vorimprägniertes Fasermaterial 12, 13 zu verwenden.

Das nun imprägnierte Strangmaterial 12, 13 wird nach dem Durchzug durch das Tränkbad 15 durch ein Vorformmodul 18 gezogen. Hierdurch wird das Strangmaterial 12, 13 parallelisiert und ausgerichtet sowie hinsichtlich des gewünschten Zielquerschnittes vorgeformt. Sodann wird das Strangmaterial 12, 13 durch das Form-/Härtemodul 19 gezogen, dass beidseitig mit jeweils drei Heizelementen 20, 21, 22 versehen ist. Mittels der Heizelemente 20, 21, 22 ist innerhalb des Form-/Härtemoduls ein Temperaturprofil einstellbar.

Soll der Profilstrang 28 eine bestimmte Krümmung aufweisen, wird das Form-/Härtemodul 19 mittels des Stellrads 33 des Verstellelementes 29 derart verstellt, dass sich ein Anstellwinkel 31 größer 0° ergibt. Hierdurch verläuft das Strangmaterial 12, 13 unter dem Anstellwinkel 31 geneigt zur Prozesslinie 32. Der Drehpunkt 30 und die Austrittsöffnung des Form-/Härtemoduls 19 liegen auf der Prozesslinie 32. Demnach wird mittels des Verstellelementes 29 die Eintrittsöffnung des Form-/Härtemoduls 19 radial zur Längsachse der Prozesslinie 32 ausgelenkt.

Das Temperaturprofil innerhalb des Form-/Härtemoduls 19 ist derart gewählt, dass das Strangmaterial 12, 13 beim Austritt aus dem Form-/Härtemodul 19 nicht vollständig ausgehärtet ist. In diesem Zustand wird das Strangmaterial 12, 13 über die Kante 34 der Austrittsöffnung des Form-/Härtemoduls gezogen. Hierdurch erhält der Profilstrang 28 eine bestimmte und reproduzierbare Krümmung in Richtung der Auslenkung der Eintrittsöffnung des Form-/Härtemoduls 19 in Bezug auf die Prozesslinie 32 sobald der Profilstrang 28 das Zugmodul 23 verlässt. Mittels eines nicht näher dargestellten Trennmoduls wird der Profilstrang 28 entsprechend der benötigten Länge abgelängt.

Durch eine Veränderung des Anstellwinkels 31 während des fortlaufenden Betriebes wird die Krümmung bzw. der Krümmungsradius des Profilstranges 28 kontinuierlich verändert. Alternativ oder zusätzlich kann die Krümmung bei einem Anstellwinkel 31 größer 0° durch eine Veränderung und/oder Steuerung der Temperatur innerhalb des Form-/Härtemoduls 19 und/oder der Durchzuggeschwindigkeit des Strangmaterials 12, 13 durch das Form-/Härtemodul 19 bestimmt werden. Je weniger das Strangmaterial 12, 13 beim Zug über die Kante 34 ausgehärtet ist, umso stärker ist die sich am Profilstrang 28 einstellende Krümmung bzw. desto kleiner ist der Krümmungsradius.

Mittels des Verstellelementes 29 kann während des fortlaufenden Betriebs zwischen dem ersten Betriebsmodus mit einem Anstellwinkel 31 von 0° und dem zweiten Betriebsmodus mit einem Anstellwinkel 31 größer 0° gewechselt werden. Somit können die Profile abwechselnd geradlinige und kontinuierlich gekrümmte Abschnitte aufweisen, wobei die gekrümmten Abschnitte unterschiedliche ineinander übergehende Krümmung in unterschiedlichen Richtungen aufweisen können. Damit lassen sich mit dem erfindungsgemäßen Strangziehverfahren und der erfindungsgemäßen Vorrichtung 10 auf einfache, kostengünstige und reproduzierbare Weise Profile mit komplexen Geometrien und kontinuierlichen Krümmungen herstellen.

### Bezugszelchenliste:

- 10: Strangziehvorrichtung
- 11: Materialentnahmemodul
- 12: Fasermaterial, Strangmaterial
- 13: Fasermaterial, Strangmaterial
- 14: Imprägniermodul
- 15: Tränkbad
- 16: Kunstharzmaterial
- 17: Umlenkrollen
- 18: Vorformmodul
- 19: Form-/Härtemodul
- 20: Heizelement
- 21: Heizelement
- 22: Heizelement
- 23: Zugmodul
- 24: erstes Zugelement
- 25: Pfeil
- 26: zweites Zugelement
- 27: Pfeil
- 28: Profilstrang
- 29: Verstellelement
- 30: Drehpunkt
- 31: Anstellwinkel
- 32: Prozesslinie
- 33: Stellrad
- 34: Kante

## Patentansprüche

1. Strangziehverfahren zum Herstellen von Profilen aus Faserverbundwerkstoffen, bei dem ein Fasermaterial (12, 13) imprägniert wird, bei dem das imprägnierte Fasermaterial (12, 13) zu einem Faserverbundprofil ausgehärtet wird, und bei dem das Faserverbundprofil abgezogen wird, **dadurch gekennzeichnet, dass** das Faserverbundprofil vor dem vollständigen Aushärten beim Abziehen derartig mit einer Kraft beaufschlagt wird, dass die Fasern des Fasermaterials (12, 13) an verschiedenen Seiten des Faserverbundprofils um ein verschiedenes Maß gegeneinander verschoben werden.

2. Strangziehverfahren nach Anspruch 1, **dadurch gekennzeichnet, dass** das Fasermaterial (12, 13) an einer Seite des Faserverbundprofils beim Abziehen gestreckt oder gestaucht wird und/oder das Fasermaterial (12, 13) aus mehreren Lagen besteht, wobei beim Abziehen einzelne Lagen gegeneinander zumindest teilweise verschoben werden.

3. Strangziehverfahren nach Anspruch 1 oder 2, **dadurch gekennzeichnet, dass** das Faserverbundprofil vor dem vollständigen Aushärten unter einem Anstellwinkel (31) über eine Kante (34) gezogen wird.

4. Strangziehverfahren nach einem der vorhergehenden Ansprüche zum Herstellen von Profilen aus Faserverbundwerkstoffen mit endlosem Strangmaterial (12, 13), einem Imprägniermodul (14), einem beheizbaren Form-/Härtemodul (19) und einem Zugmodul (23), wobei insbesondere in einem ersten Betriebsmodus zum Herstellen von geradlinigen Profilen das Strangmaterial (12, 13) in einer geradlinigen Prozesslinie (32) durch sämtliche Module (14, 19, 23) gezogen wird und in einem zweiten Betriebsmodus zum Herstellen von nicht-geradlinigen Profilen das Strangmaterial (12, 13) unter einem Anstellwinkel (31) größer 0° zur Prozesslinie (32) ausgelenkt wird, **dadurch gekennzeichnet, dass** unvollständig ausgehärtetes Strangmaterial (12, 13) geradlinig in Richtung des Zugmoduls (23) unter dem Anstellwinkel (31) größer 0° über die Kante (34) gezogen wird.

5. Strangziehverfahren nach einem der vorhergehenden Ansprüche, **dadurch gekennzeichnet, dass** Faserverbundwerkstoffe mit duromeren Matrixmaterialen (16) verwendet werden.

6. Strangziehverfahren nach Anspruch 4 oder 5, **dadurch gekennzeichnet, dass** das Form-/Härtemodul (19) unter einem Anstellwinkel (31) größer 0° zur Prozesslinie (32) geneigt gestellt wird und/oder das Strangmaterial (12, 13) vom Form-/Härtemodul (19) koaxial zur Prozesslinie (32) mittels des Zugmoduls (23) abgezogen wird.

7. Strangziehverfahren nach einem der Ansprüche 3 bis 6, **dadurch gekennzeichnet, dass** eine Krümmung der Profile mittels einer Veränderung des Anstellwinkels (31), insbesondere kontinuierlich, verändert wird.

8. Strangziehverfahren nach einem der Ansprüche 3 bis 7, **dadurch gekennzeichnet, dass** die Krümmung der Profile bei einem, insbesondere konstanten, Anstellwinkel (31) größer 0° mittels einer Veränderung der Temperatur des beheizbaren Form-/Härtemoduls (19) und/oder mittels einer Veränderung der Geschwindigkeit beim Durchziehen des Strangmaterials (12, 13) durch das Form-/Härtemodul (19), vorzugsweise kontinuierlich, verändert wird.

9. Strangziehverfahren nach einem der vorhergehenden Ansprüche, **dadurch gekennzeichnet, dass** zum Aushärten des imprägnierten Fasermaterials ein vorbestimmtes Temperaturprofil eingestellt wird.

10. Strangziehvorrichtung zum Herstellen von Profilen aus Faserverbundwerkstoffen mit einem Härteabschnitt zum Aushärten eines imprägnierten Fasermaterials (12, 13) zu einem Faserverbundprofil, und mit einem Zugmodul (23) zum Abziehen des Faserverbundprofils, **gekennzeichnet durch** Mittel zum Beaufschlagen des Faserverbundprofils vor dem vollständigen Aushärten beim Abziehen mit einer Kraft zum Verschieben der Fasern des Fasermaterials (12, 13) um ein verschiedenes Maß an verschiedenen Seiten des Faserverbundprofils gegeneinander.

11. Strangziehvorrichtung nach Anspruch 10, **gekennzeichnet durch** eine Kante (34), über die das Faserverbundprofil vor dem vollständigen Aushärten unter einem Anstellwinkel (31) ziehbar ist.

12. Strangziehvorrichtung nach Anspruch 10 oder 11, insbesondere zum Durchführen des Strangziehverfahrens nach einem der Ansprüche 1 bis 9 zum Herstellen von Profilen aus Faserverbundwerkstoffen mit endlosem Strangmaterial (12, 13), einem Imprägniermodul (14), einem beheizbaren Form-/Härtemodul (19) und einem Zugmodul (23), wobei insbesondere in einem ersten Betriebsmodus zum Herstellen von geradlinigen Profilen das Strangmaterial (12, 13) in einer geradlinigen Prozesslinie (32) durch sämtliche Module (14, 19, 23) mittels des Zugmoduls (23) ziehbar ist und in einem zweiten Betriebsmodus zum Herstellen von nicht-geradlinigen Profilen das Strangmaterial (12, 13) unter einem Anstellwinkel (31) größer 0° zur Prozesslinie (32) ausgelenkt ist, **dadurch gekennzeichnet, dass** unvollständig ausgehärtetes Strangmaterial (12, 13) geradlinig in Richtung des Zugmoduls (23) unter dem Anstellwinkel (31) größer 0° mittels des Zugmoduls (23) über die Kante (34) ziehbar ist.

13. Strangziehvorrichtung nach Anspruch 12, **dadurch gekennzeichnet, dass** das Form-/Härtemodul (19) mittels eines Verstellelementes (29), insbesondere mittels einer verstellbaren Mechanik und/oder einer Steuerung, mit einem Anstellwinkel (31) größer 0° zur Prozesslinie (32) geneigt einstellbar ist und/oder das Verstellelement (29) an einer Eintrittsöffnung des Form-/Härtemoduls (19) angeordnet ist, wobei vorzugsweise ein Drehpunkt (30) zum Einstellen des Anstellwinkels (31) für das Form-/Härtemodul (19) an einer Austrittsöffnung des Form-/Härtemoduls (19) angeordnet ist.

14. Strangziehvorrichtung nach Anspruch 13, **dadurch gekennzeichnet, dass** das Form-/Härtemodul (19) mittels des Verstellelementes (29) mit einem ersten Anstellwinkel (31) um eine erste Achse und/oder mit einem zweiten Anstellwinkel um eine zweite Achse verstellbar ist, wobei die zweite Achse von der ersten Achse verschieden ist, und vorzugsweise das Form-/Härtemodul (19), insbesondere zum Herstellen von sphärischen Profilsträngen (28), gleichzeitig um den ersten Anstellwinkel (31) und den zweiten Anstellwinkel verstellbar ist.

15. Verwendung eines Strangziehverfahrens nach einem der Ansprüche 1 bis 9 und/oder einer Strangziehvorrichtung nach einem der Ansprüche 10 bis 14 zum Herstellen von, insbesondere kontinuierlich, gekrümmten Profilen aus Faserverbundwerkstoffen, vorzugsweise mit duromeren Matrixmaterialien (16).
